# EUROPEAN PATENT APPLICATION

(11) **EP 3 739 544 A1**
(43) Date of publication of application: **18.11.2020**
(21) Application number: 20175018.9
(22) Date of filing: 15.05.2020
(51) Int. Cl.: G06Q 40/02, G07F 19/00, G06Q 20/18, G06Q 20/10

(54) **AN INTERACTION SYSTEM AND METHOD**

(30) Priority: 15.05.2019 TR 201907283
(71) Applicant: Yapi ve Kredi Bankasi Anonim Sirketi, Istanbul (TR)
(72) Inventor: Demir, Özkan, Kocaeli (TR); Yilmaz, Emre, Kocaeli (TR)
(74) Representative: Dericioglu, E. Korhan

(57) **Abstract**

The present invention relates to an interaction system (1) and method which can be managed without increasing hardware and software maintenance costs. The said interaction system (1) comprises at least one client screen (3) operating connected to the representative computer (2). The identity of the client is authenticated via the internet banking server (6).

## Description

### Field of the Invention

The present invention relates to an interaction system and method for informing clients and securely receiving input from the clients, particularly in the banking sector.

### Background of the Invention

In transactions in which the identities of the parties are needed to be sure, such as making a contract, the relevant texts are usually mutually signed. Therefore, the parties declare that they accept the said text. However, the number of texts that need to be signed may be high especially in banking transactions. The fact that these texts are usually printed on a paper causes waste of paper. For this reason, creating the texts in electronic environment and authentication of the identity of the parties and especially the clients signing the texts in the electronic environment prevents time loss and waste of paper.

Hardware such as tablet computers and secondary computers with a screen are used to inform clients in electronic environment and obtain their consent electronically. For example in banking applications, the clients can see and confirm the related text by using a tablet computer present in the bank branch. Since the tablet computers are hardware for the end user, they are not suitable for long-term use. Furthermore, due to the hardware and software requirements such as the necessity to charge the said tablet computers, to keep their software updated, wireless connection to the network, the said hardware increases the operational costs. Secondary computers having a screen are generally designed with smaller dimensions compared to a conventional computer. In the said devices, software and hardware maintenance requirements are experienced as factors that increase operating cost.

There is a need for a configuration that can be managed without increasing software and hardware maintenance costs.

The United States patent document no. US2006060647, an application in the state of the art, discloses a system and method for interacting with clients in bank branches.

### Summary of the Invention

The objective of the present invention is to provide an interaction system and method which can be managed without increasing hardware and software maintenance costs.

### Detailed Description of the Invention

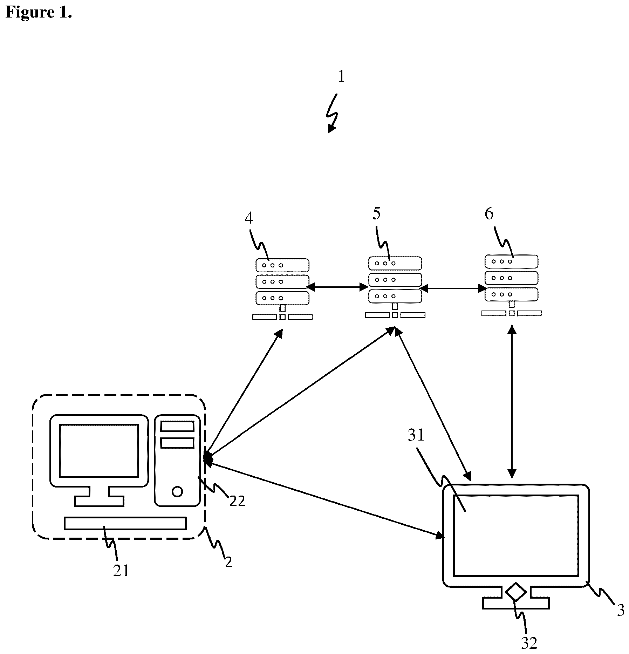

The interaction system developed in order to achieve the objective of the present invention is illustrated in the accompanying figure, wherein
Figure 1 is a schematic view of the inventive interaction system.

The components shown in the figure are each given reference numerals as follows:
**1.** Interaction system
**2.** Representative computer
   **21.** Environment unit
   **22.** Control unit
**3.** Client screen
   **31.** Touch screen
   **32.** Control unit
**4.** Application server
**5.** Integration server
**6.** Internet banking server

An interaction system (1), which can be managed without increasing the software and hardware maintenance cost, essentially comprises
- at least one representative computer (2) which has at least one environment unit (21) suitable for receiving data from the user and at least one control unit (22) suitable for running at least one application and extracting data of the client from a database,
- at least one client screen (3) which has at least one touch screen (31) suitable for receiving data from the client and at least one control unit (32) suitable for running at least one shell application,
- at least one application server (4) which is suitable for accommodating information of the clients and presenting of the information of the clients to the representative computer (2) in accordance with the requests made by the representative computer (2),
- at least one integration server (5) which is suitable for receiving the requests made by the representative computer (2) and the client screen (3) and transferring the data created in accordance with the said requests to the representative computer (2) or the client screen (3),
- at least one internet banking server (6) which is for authenticating the identity of the client.

When the client representative operates the representative computer (2), the control unit (22) starts to run an application which the representative computer (2) has. In the meantime, since there is no client yet, preferably an advertisement is displayed on the client screen (3). Furthermore, the touch screen (31) of the client screen (3) is passive at that time. When the client screen (3) is opened, the control unit (32) starts to run a shell application. The said shell application sends a request to the integration server (5), which also comprises the information to which representative computer (2) the client screen (3) is connected. The integration server (5) records this message in its memory. The client representative runs the software of the bank branch on the representative computer (2). The said software sends a request to the integration server (5). The integration server (5) also records this message in its memory. Therefore, information of which client representative works on which representative computer (2) and which client screen (3) is connected to this representative computer (2) are recorded in the integration server (5).

When a client comes to the customer representative, the client representative uses the environment unit (21) to enter descriptive information of the client to the application. The application running on the representative computer (2) requests the client information from the application server (4) using this descriptive information. The application server (4) generates a token in response to this information and transmits this token to the representative computer (2). The application server (4) also transmits this token to the integration server (5). The integration server (5) transmits this token and the screen information to be opened to the client screen (3). The shell application of the client screen (3) sends a request to the internet banking server (6) along with the screen information to be opened and token information. The internet banking server (6) requests the information generated in return for this token from the application server (4). The application server (4) transmits the information generated in return for this token to the internet baking server (6). Then, the internet banking server (6) opens the screens that need to be opened and sends them to the client screen (3). Therefore, data flow between the representative computer (2) and the client screen (3) is achieved without the sensitive data being shared between the representative computer (2) and the client screen (3).

When an input is required from the client, the client representative starts the login process via the software on the representative computer (2). The request to receive input from the client is transmitted to the internet banking server (6). The internet banking server (6) also allows the opening of the relevant screen on the client screen (3). Meanwhile, control of the client screen (3) is prevented preferably by means of the representative computer (2). The identity of the client is authenticated through the internet banking application (6). Identity authentication process can be achieved using, but not limited to, a one-time password (OTP) and/or biometric authentications such as face recognition and fingerprint recognition, which are received by short text message or generated through an application. When the identity of the client is authenticated successfully, preferably a replica (copy of the original) of the client screen is created on the representative computer (2). After receiving the data from the client, the replica on the representative computer (2) is closed.

By means of the screen to be opened on the client screen (3) being provided by the internet banking server (6), it is not necessary to run an application other than the shell application on the said client screen (2). Thus, the software maintenance costs of the said client screen are reduced. In addition, reducing the software load allows the required hardware configuration to be reduced. Therefore, hardware maintenance costs are also reduced.

An interaction method, which can be managed without increasing software and hardware maintenance costs, comprises the steps of
- requesting information of the client from an application server (4) via the representative computer (2),
- generating a unique token enabling identification comprising the information generated in response to the said request by the application server (4),
- sending the requested information and the token to the representative integration server (5) by the application server (4),
- sending the token to the shell application of the client screen (3) by the integration server (5),
- the client screen (3) making a request from the internet banking server (6) via the shell application,
- the internet banking server (6) receiving the data generated in return for the said token from the application server (4),
- the internet banking server (6) sending the information of the screen to be opened on the client screen (3) to the client screen (3) in accordance with the data it receives,
- the client screen (3) opening the screen to be displayed to the client.

The said interaction method also comprises the steps of
- sending a request to the internet banking server (5) when there is a transaction requiring authentication of the client identity,
- the internet banking client (5) operating the identity authentication protocol in accordance with the said request,
- the internet banking server (5) sending the result of the identity authentication protocol to the representative computer (2) and to the client screen (3).

## Claims

1. An interaction system (1), which can be managed without increasing software and hardware maintenance costs, comprising
- at least one representative computer (2) which has at least one environment unit (21) suitable for receiving data from the user and at least one control unit (22) suitable for running at least one application and extracting data of the client from a database,
- at least one client screen (3) which has at least one touch screen (31) suitable for receiving data from the client and at least one control unit (32) suitable for running at least one shell application, and **characterized by**
- at least one application server (4) which is suitable for accommodating information of the clients and presenting of the information of the clients to the representative computer (2) in accordance with the requests made by the representative computer (2),
- at least one integration server (5) which is suitable for receiving the requests made by the representative computer (2) and the client screen (3) and transferring the data created in accordance with the said requests to the representative computer (2) or the client screen (3),
- at least one internet banking server (6) which is for authenticating the identity of the client.

2. An interaction method, which can be managed without increasing software and hardware maintenance costs, **characterized by** the steps of
- requesting information of the client from an application server (4) via the representative computer (2),
- generating a unique token enabling identification comprising the information generated in response to the said request by the application server (4),
- sending the requested information and the token to the representative integration server (5) by the application server (4),
- sending the token to the shell application of the client screen (3) by the integration server (5),
- the client screen (3) making a request from the internet banking server (6) via the shell application,
- the internet banking server (6) receiving the data generated in return for the said token from the application server (4),
- the internet banking server (6) sending the information of the screen to be opened on the client screen (3) to the client screen (3) in accordance with the data it receives,
- the client screen (3) opening the screen to be displayed to the client.

3. An interaction method according to claim 2, comprising the steps of
- sending a request to the internet banking server (5) when there is a transaction requiring authentication of the client identity,
- the internet banking client (5) operating the identity authentication protocol in accordance with the said request,
- the internet banking server (5) sending the result of the identity authentication protocol to the representative computer (2) and to the client screen (3).
